# EUROPÄISCHE PATENTSCHRIFT

(11) **EP 4 370 361 B1**
(45) Veröffentlichungstag und Bekanntmachung des Hinweises auf die Patenterteilung: **14.05.2025**
(21) Anmeldenummer: 22741514.8
(22) Anmeldetag: 11.07.2022
(51) Int. Cl.: B60K 7/00, B60K 1/00

(54) **ANTRIEBSRAD FÜR EINEN TRANSPORTWAGEN, ANTRIEBSSYSTEM MIT EINEM SOLCHEN ANTRIEBSRAD UND TRANSPORTWAGEN**
DRIVE WHEEL FOR A CARRIAGE, DRIVE SYSTEM COMPRISING SUCH A DRIVE WHEEL AND CARRIAGE
ROUE MOTRICE POUR UN CHARIOT, SYSTEME D'ENTRAINEMENT COMPRENANT UNE TELLE ROUE MOTRICE ET CHARIOT

(30) Priorität: 12.07.2021 DE 202021103729 U
(43) Veröffentlichungstag der Anmeldung: 22.05.2024
(73) Patentinhaber: Blickle Räder + Rollen GmbH u. Co. KG, 72348 Rosenfeld (DE)
(72) Erfinder: HÖLLE, Rolf, 72348 Rosenfeld (DE); STOTZ, Markus, 72336 Balingen (DE); KREIS, Dominik, 72072 Tübingen (DE)
(74) Vertreter: Holzwarth-Rochford, Andreas
(86) Internationale Anmeldenummer: PCT/EP2022/069322
(87) Internationale Veröffentlichungsnummer: WO 2023/285382

(56) Entgegenhaltungen:
- WO-A1-2020/085213
- DE-A1- 10 132 319
- DE-A1- 10 343 857
- DE-A1- 3 826 933
- FR-A1- 2 859 951
- US-A1- 2002 121 823

## Beschreibung

Die vorliegende Erfindung betrifft ein Antriebsrad für einen Transportwagen, wobei das Antriebsrad zumindest einen um zumindest eine Radachse rotierbaren Radkörper, zumindest eine die Radachse stützende Radgehäuseeinheit; und zumindest eine mit dem Radkörper zumindest teilweise in Wirkverbindung stehende erste Funktionskomponente umfasst; sowie ein Antriebssystem umfassend ein solches Antriebsrad sowie einen Transportwagen umfassend ein erfindungsgemäßes Antriebsrad und/oder ein erfindungsgemäßes Antriebssystem.

Aus dem Stand der Technik, beispielsweise aus der DE 20 2018 106 716 U1, sind Antriebsräder bekannt. Es wird vorgeschlagen, dass ein Transportwagen Laufrollen aufweist, wobei die Laufrollen in Wirkverbindung mit Elektromotoren stehen.

Auch die DE 20 2004 010 854 U1 offenbart einen Transportwagen, welcher mittels gattungsgemäßer Antriebsräder in Form von Bockrollen, die mit Elektromotoren in Wirkverbindung stehen, angetrieben werden kann. Dabei wird der Elektromotor zumindest bereichsweise innerhalb der Bockrolle angeordnet.

Die EP 2 623 391 A2 offenbart ein Transportgerät zum Transport einer Golftasche und wenigstens einer Person. Das Transportgerät weist Antriebsräder auf, wobei ein Motor als Nabenmotor ausgebildet ist, der im Bereich einer Hinterachse des Transportgeräts angeordnet ist.

Schließlich offenbart die DE 101 05 614 A1 ein Krankenbett mit Laufrädern. Es wird vorgeschlagen, dass ein Elektromotor vorgesehen ist, um eine Schwenkbewegung einer Lenkrolle zu erreichen.

Weitere Antriebsräder werden im Stand der Technik in der DE 103 43 857 A1, der WO 2020/085213 A1, der DE 38 26 933 A1 und der US 2002/121823 A1 offenbart.

Die aus dem Stand der Technik bekannten Antriebsräder weisen jedoch den Nachteil auf, dass ein Betrieb dieser mit maximalen Fahrgeschwindigkeiten und hohen Belastungen, beispielsweise beim Fahren größerer Steigungen auf Rampen oder dergleichen, nicht oder nur unzureichend möglich ist. Insbesondere in derartigen Grenzbereichen, bei denen ein wiederholtes Beschleunigen und Bremsen notwendig ist, kommt es aufgrund thermischer Überlastung des Antriebsrades bzw. der Funktionskomponenten des Antriebsrades zu Fehlfunktionen.

Es ist daher Aufgabe der vorliegenden Erfindung, das gattungsgemäße Antriebsrad derartig weiterzuentwickeln, dass die Nachteile des Stands der Technik überwunden werden, insbesondere ein Antriebsrad bereitgestellt wird, welches auch bei Belastungen im Grenzbereich bspw. bei langen Rampen und regelmäßigem Beschleunigen und Bremsen einen dauerhaften Betrieb, zumindest einer längeren Betriebszeit im Vergleich zu aus dem Stand der Technik bekannten Antriebsrädern ermöglicht.

Diese Aufgabe wird im Hinblick auf das Antriebsrad gemäß dem Kennzeichen des Anspruchs 1 gelöst. Bevorzugte Ausführungsformen sind in den Ansprüchen 2 bis 10 beschrieben.

Weiterhin liefert die Erfindung ein Antriebssystem für zumindest einen Transportwagen umfassend zumindest ein erfindungsgemäßes Antriebsrad, vorzugweise eine Vielzahl von erfindungsgemäßen Antriebsrädern gemäß Anspruch 11. Weitere bevorzugte Ausführungsformen des Antriebsystems werden in den Ansprüchen 12 und 13 dargestellt

Darüber hinaus liefert die Erfindung einen Transportwagen umfassend zumindest ein erfindungsgemäßes Antriebsrad und/oder ein erfindungsgemäßes Antriebssystem gemäß dem Anspruch 14. Eine bevorzugte Ausführungsform des Transportwagens ist in Anspruch 15 angegeben.

Der Erfindung liegt somit die überraschende Erkenntnis zugrunde, dass durch Verwendung einer bewusst massiv ausgebildeten Radgehäuseeinheit, insbesondere in Form eines Aluminiumgehäuses, eine thermische Überbelastung des Antriebsrades bzw. dessen Funktionskomponenten vermieden werden kann und dadurch die Belastbarkeit des Antriebsrades bzw. eines damit ausgestatteten Transportwagens erhöht werden kann.

Durch eine entsprechende Montage einer thermische Energie erzeugenden Funktionskomponente, wie einer Antriebseinheit, insbesondere in Form eines Elektromotors oder Einzelkomponenten dieses, so dass ein zumindest indirekter oder mittelbarer thermischer Kontakt zu der Radgehäuseeinheit besteht, wird Wärme, die von dem Antriebsrad, insbesondere Funktionskomponente, erzeugt wird, abgeleitet. Dadurch steht über einen längeren Zeitraum eine erhöhte Belastbarkeit des Antriebsrades, insbesondere ein erhöhtes Drehmoment für das Antriebsrad, zur Verfügung.

Darüber hinaus ermöglicht es die Ausbildung der Radgehäuseeinheit, dass verschiedene Funktionskomponenten des Antriebsrades an diesem befestigt bzw. in thermischen Kontakt mit diesem gebracht werden können. Beispielsweise kann in die Radgehäuseeinheit eine Steuereinheit, bspw. eine Leistungsplatine der Steuereinheit integriert und in thermischen Kontakt mit der Radgehäuseeinheit gebracht werden.

Dabei kann zwischen der Funktionskomponente und der Radgehäuseeinheit zumindest eine Fülleinrichtung wie ein Wärmeleitpad angeordnet werden, um so eine bestmögliche thermische Kopplung zwischen der Funktionskomponente und der Radgehäuseeinheit zu erzielen. Damit wird eine bestmögliche Wärmeabgabe von der Funktionskomponente an die Radgehäuseeinheit zur Verfügung gestellt.

Diese Leistungsplatine bzw. Endstufe kann dann im Vergleich zu aus dem Stand der Technik bekannten Antriebsrädern über einen längeren Zeitraum in ihrem maximalen Leistungsbereich betrieben werden, ohne zu überhitzen.

Eine weitere Funktionskomponente, die mit der Radgehäuseeinheit in thermischen Kontakt gebracht werden kann ist beispielsweise ein Bremswiderstand. Dieser kann direkt an der Radgehäuseeinheit, insbesondere einem Hauptkörper der Radgehäuseeinheit, befestigt werden. Die Radgehäuseeinheit kann auch derartig mehrteilig aufgebaut sein, dass eine mittelbare Befestigung an der Radgehäuseeinheit erfolgt oder eine mittelbare Befestigung an dem Hauptkörper des Radgehäuseeinheit über eine weitere Gehäusekomponente, wie eine Elektronikabdeckung, die wiederum ebenfalls wärmeleitend ist, erfolgt.

Dies ermöglicht es, dass Bremsenergie schnell von der Wärmequelle in Form des Bremswiderstandes abgeleitet und an die Radgehäuseeinheit abgegeben werden kann. Auf diese Weise können im Vergleich zu aus dem Stand der Technik bekannten Antriebsrädern längere Bremszyklen ermöglicht werden.

Die Erfinder haben ferner erkannt, dass durch die Radgehäuseeinheit zwar die Masse des Systems vergrößert wird, die damit einhergehenden Nachteile jedoch dadurch überkompensiert werden, dass die Radgehäuseeinheit als thermischer Energiespeicher einsetzbar wird.

Die durch die Funktionskomponenten des Antriebsrades erzeugte thermische Energie kann dadurch schnell abgeleitet und in der Radgehäuseeinheit aufgenommen werden, so dass eine Überhitzung der Funktionskomponenten, bzw. des Antriebsrades vermieden wird. Die in der Radgehäuseeinheit gespeicherte Wärmeenergie kann dann an eine Tragstruktur des Transportwagens oder an die Umgebungsluft abgegeben werden.

Das Abführen der Wärmeenergie aus der jeweiligen Funktionskomponente in die Radgehäuseeinheit und die damit einhergehende Möglichkeit, dass Antriebsrad in höheren Leistungsbereichen bzw. einem längeren Zeitraum zu betreiben, führt ferner dazu, dass die Fahrgeschwindigkeiten des Transportwagens erhöht wird. Überraschenderweise wurde von den Erfindern erkannt, dass durch diese vorteilhafte Erhöhung der Fahrtgeschwindigkeit auch die Abgabe der Wärmeenergie von der Radgehäuseeinheit an die Umgebung erhöht wird, so dass eine noch bessere thermische Energieabfuhr ermöglicht wird.

Zur Verstärkung dieses Effektes ist es insbesondere bevorzugt, dass die Radgehäuseeinheit eine Oberflächenstruktur insbesondere in Form von Kühlrippen oder Kühlfinnen aufweist. Auch kann vorgesehen sein, dass um die Radgehäuseeinheit mittels einer Lüftereinrichtung eine Zwangszirkulation der Umgebungsluft erzeugt wird und so eine verbesserte Abfuhr der Wärmeenergie von der Radgehäuseeinheit erreicht wird. Weiterhin kann durch diese Lüftereinrichtung eine bessere Abfuhr von thermischer Energie von weiteren (zweiten) Funktionskomponenten des Antriebsrades, die insbesondere nicht in einem direkten thermischen Kontakt mit der Radgehäuseeinheit, insbesondere dem Hauptkörper und/oder der Gehäusekomponente stehen, vorzugsweise durch Konvektion, erreicht bzw. unterstützt werden.

Gleichzeitig ermöglicht es das erfindungsgemäße Antriebsrad, dass eine kompakte Bauform in Kombination mit einem direkten Antrieb erreicht werden kann. Dadurch lassen sich beispielsweise Einbauhöhen von lediglich 150 mm erreichen, vorzugsweise bei einer gleichzeitigen Tragfähigkeit von beispielsweise mindestens 100kg, bevorzugt mindestens 250kg, pro Antriebsrad. Bei Verwendung zweier Antriebsräder wird somit beispielsweise eine Tragfähigkeit von mindestens 200 Kilogramm bzw. 500 Kilogramm erreicht, bei gleichzeitiger Erreichung einer Antriebsschubkraft von beispielsweise mehr als 30 daN (30 Dekanewton). Dies ermöglicht es, dass auch lange Rampen mit maximaler Antriebskraft befahren werden können und ein regelmäßiges Beschleunigen und Bremsen dauerhaft ermöglicht wird. Dies bedeutet insbesondere, dass Transportwagen mit einer maximalen Belastung von beispielsweise 200kg bzw. 500kg optimal unterstützt werden und sogar Reserven im Hinblick auf Beschleunigungs- und Bremsvorgänge bereitgestellt werden. Die zuvor angebgenen Massen sind lediglich bespielhaft angeführt, um den Anwendungsbereich der Erfindung zu veranschaulichen, wobei auch Anwendung vorstellbar sind mit Tragfähigkeiten der Antriebsräder von 5t und mehr.

Besonders bevorzugt wird das erfindungsgemäße Antriebsrad in einem Antriebssystem, welches neben den Antriebsrädern weitere Komponenten umfasst, eingesetzt. Bevorzugt handelt es sich bei diesem System um ein offenes / flexibles System, bei dem einzelne Komponenten in verschiedenen Kombinationen an variablen Transportwägen angebracht werden können und zu einer Antriebsunterstützung des Transportwagens dienen. Mit anderen Worten kann das System modular aufgebaut werden.

In einer bevorzugten Ausführungsform umfasst das Antriebssystem zwei erfindungsgemäße Antriebsräder, die insbesondere als Bockrollen ausgestaltet sind und in die entsprechenden Funktionskomponenten in Form einer Motoransteuerungselektronik und einem Motor integriert sind. Diese stehen mit einer Steuervorrichtung, die insbesondere in Form einer Elektronikbox mit einer Energieversorgungseinrichtung, wie einer Akkueinheit, ausgebildet sein kann, in Verbindung.

Um einem Benutzer eine Steuerung der Antriebsräder zu ermöglichen, ist eine Mensch-Maschinen-Schnittstelle bspw. in Form eines Sensorgriffs mit einer Krafterkennung und einer Handerkennung vorgesehen.

Das erfindungsgemäße Antriebsrad bzw. Antriebssystem überwindet somit das aus dem Stand der Technik bekannte Problem einer Wärmeerzeugung von Antriebsmotoren und Motorleistungselektronik. Insbesondere ermöglicht es die Erfindung, dass auch bei vielen Anfahrten, Rampenfahrten und Bremszyklen die dabei entstehende sehr hohe Energiemenge effizient abgeleitet werden kann. Insbesondere führt die Erfindung dazu, dass eine Verringerung des Wirkungsgrades aufgrund der entstehenden Wärmeenergie sowie eine Überhitzung bspw. einer Endstufe durch die Beaufschlagung mit Pulsweitenmodulationssignalen (PWM-Signalen) vermieden wird.

Weitere Merkmale und Vorteile der Erfindung ergeben sich aus der nachfolgenden Beschreibung, deren bevorzugte Ausführungsform der Erfindung anhand beispielhafter Figuren erläutert sind.

Dabei zeigt:
Figur 1 eine Explosionsansicht eines erfindungsgemäßen Antriebsrades;
Figur 2 eine erste Querschnittsansicht des Antriebsrades der Figur 1;
Figur 3 eine zweite Querschnittsansicht des Antriebsrades der Figuren 1 und 2;
Figuren 4a bis 4c Querschnittansichten durch verschiedene Ebenen des Antriebsrades der Figuren 1 bis 3; und
Figur 5 eine Aufsicht auf einzelne Komponenten eines erfindungsgemäßen Antriebssystems.

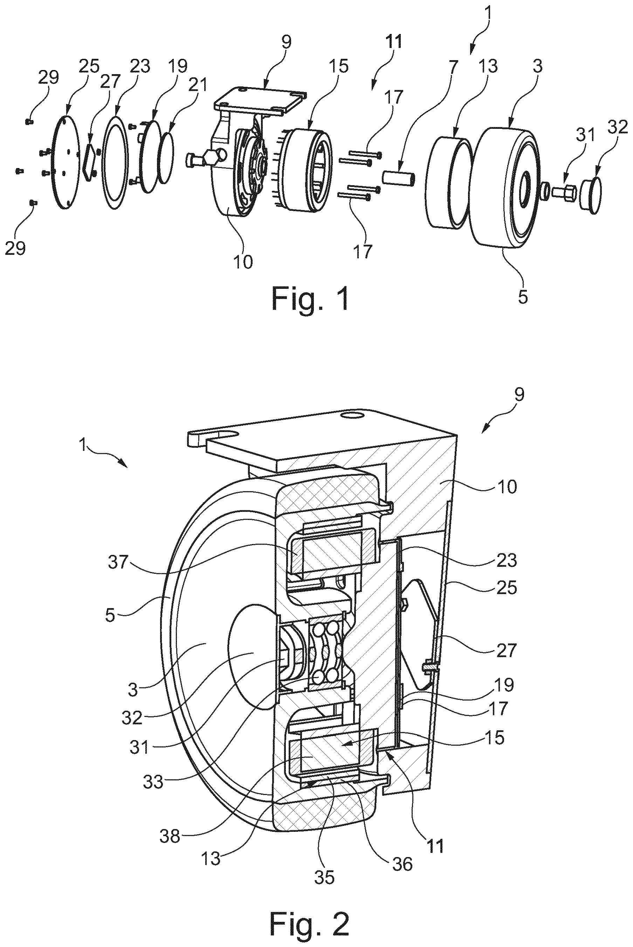

In Figur 1 ist eine Explosionsansicht eines erfindungsgemäßen Antriebsrades 1 dargestellt. Das Antriebsrad umfasst einen Radkörper 3 auf dessen Umfang ein Laufbelag 5 angeordnet ist. Der Radkörper 3 ist rotierbar um eine Radachse 7 gelagert. Die Radachse 7 stützt sich wiederum an einer Radgehäuseeinheit 9, die in dem Ausführungsbeispiel als massives Aluminiumdruckelement ausgebildet ist, ab. Die Radgehäuseeinheit 9 weist einen Hauptkörper 10 auf.

Innerhalb des Radkörpers 3 ist eine teilweise eine erste Funktionskomponente bildende erste Antriebseinheit 11 angeordnet. Die Antriebseinheit 11 bildet einen Elektromotor und umfasst einen mit dem Radkörper 3 verbundenen, insbesondere drehmitnahmesicher angeordneten und eine zweite Funktionskomponente bildenden Rotor 13 der eine Vielzahl von Permanentmagneten aufweist.

Innerhalb des Rotors 13 ist ein, eine weitere erste Funktionskomponente bildender, Stator 15 angeordnet, welcher ortsfest relativ zu der Radgehäuseeinheit 9, insbesondere dem Hauptkörper 10, angeordnet ist.

Mittels der Antriebseinheit 11 kann der Radkörper 3 um die Radachse 7 rotiert werden. Der Stator 15 ist über Befestigungselemente 17 in Form von Schrauben mit der Radgehäuseeinheit 9 verbunden. Mittels der Schrauben 17 ist ferner eine thermische Verbindung zwischen dem Stator 15 sowie der Radgehäuseeinheit 9 sichergestellt.

Auf der dem Stator 15 abgewandten Seite der Radgehäuseeinheit 9 ist eine weitere erste Funktionskomponente in Form einer Steuereinheit 19 angeordnet. Zwischen der Steuereinheit 19 und dem Hauptkörper 10 der Radgehäuseeinheit 9 ist eine Fülleinrichtung in Form eines Wärmeleitpads 21 angeordnet. Das Wärmeleitpad 21 ist elektrisch isolierend, stellt jedoch eine bestmögliche thermische Verbindung zwischen der Steuereinheit 19 und der dem Hauptkörper der Radgehäuseeinheit 9 sicher. Insbesondere wird durch das Wärmeleitpad 21 vermieden, dass es zu thermisch isolierenden Lufteinschlüssen zwischen der Radgehäuseeinheit 9 und der Steuereinheit 19 kommt, durch die ein Wärmeübertrag von der Steuereinheit 19 auf die Radgehäuseeinheit 9 negativ beeinflusst wird.

Auf der dem Radkörper 3 abgewandten Seite der Radgehäuseeinheit 9 sind darüber hinaus eine Dichtungsscheibe 23 sowie eine Gehäusekomponente in Form einer Abdeckung 25 angeordnet. Durch diese wird ein Schutz der Steuereinheit 19 vor Feuchtigkeit sichergestellt. Darüber hinaus ist vorgesehen, dass die Abdeckung 25 in thermischem Kontakt mit einer weiteren ersten Funktionskomponente des Antriebsrades 1 in Form eines Bremswiderstandes 27 steht. Die Abdeckung 25 stellt eine Gehäusekomponente der mehrteilig ausgebildeten Radgehäuseeinheit 9 dar und umfasst, ähnlich des Hauptkörpers 10 der Radgehäuseeinheit 9 ein thermisch gut leitendes Material, so dass an dem Bremswiderstand 27 entstehende Wärmeenergie an die Gehäusekomponente in Form der Abdeckung 25 und von dieser an den Hauptkörper 10 der Radgehäuseeinheit 9 abgeführt werden kann.

Schließlich umfasst das Antriebsrad Befestigungselemente 29 zur Befestigung der Abdeckung 25 an dem Hauptkörper der Radgehäuseeinheit 9 sowie zur Unterstützung der Übertragung von thermischer Energie an den Hauptkörper 10. Ferner sind Befestigungselemente 31 zur Verbindung des Radkörpers 3 mit der Radachse 7 sowie eine Abdeckkappe 32 vorgesehen.

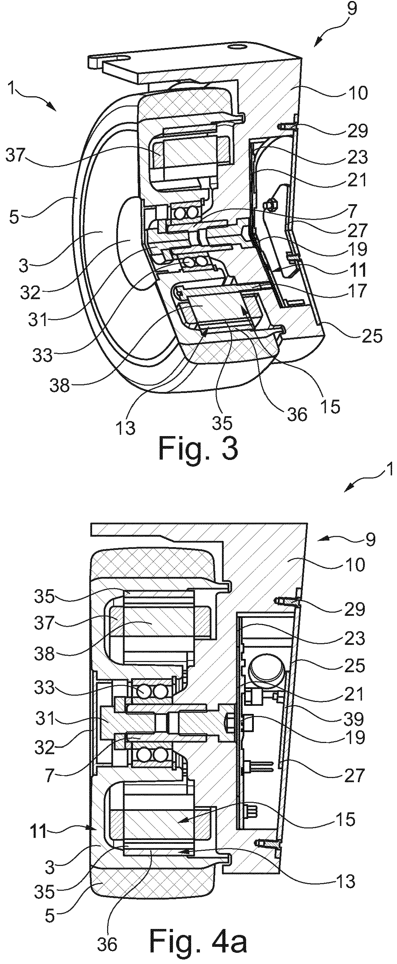

In den Figuren 2 und 3 sind unterschiedliche Querschnittansichten des Antriebsrades 1 dargestellt. Wie insbesondere Figuren 2 und 3 zu entnehmen ist, ist im Bereich zwischen der Radachse 7 und dem Radkörper 3 ein Lagerelement 33, umfassend ein Kugellager angeordnet. Dies stellt sicher, dass der Radkörper im Wesentlichen frei um die Radachse 7 drehbar gelagert ist. Wie den Figuren 2 und 3 darüber hinaus zu entnehmen ist, umfasst der Rotor 13 Permanentmagnete 35, sowie einen Rotorkern 36 umfassend zumindest ein Rotorblech, die drehmitnahmesicher mit der um die Radachse 7 rotierbaren Radkörper 3 verbunden sind.

Gegenüber dem Rotor 13, insbesondere dem Permanentmagneten 35 ist der Stator 15 angeordnet. Dabei umfasst der Stator 15 elektromagnetische Wicklungen 37 sowie einen Statorkern 38 umfassend zumindest ein Statorblech, wobei die Wicklungen vorzugsweise zumindest bereichsweise den Statorkern 38 umgeben. Durch eine entsprechende Ansteuerung der Wicklung 37, insbesondere mittels PWM-Signalen ist ein Antrieb des Radkörpers 3 zur Rotation um die Radachse 7 möglich.

In der dargestellten Ausführungsform ist das Antriebsrad 1 als Bockrolle ausgebildet. In nicht dargestellten Ausführungsformen ist auch vorstellbar, dass das Antriebsrad darüber hinaus eine Schwenkachse ausweist, welche im Wesentlichen senkrecht zu der Radachse 7 verläuft. Über eine nicht dargestellte zweite Antriebseinheit ist dann eine zwangsgelenkte Drehung des Radkörpers um eine Schwenkachse möglich. Dabei ist vorgesehen, dass die zweite Antriebseinheit beziehungsweise deren Funktionskomponenten ebenfalls mit der Radgehäuseeinheit 9, insbesondere dem Hauptkörper und/oder Gehäusekomponenten, in thermischem Kontakt steht, so dass eine bestmögliche Abfuhr von thermischer Energie von der zweiten Antriebseinheit ermöglicht wird.

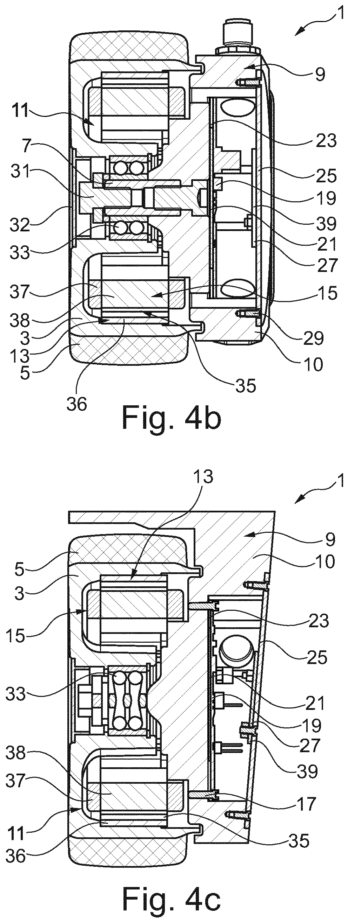

In den Figuren 4a bis 4c sind verschiedene Querschnittsansichten durch verschiedene Ebenen des Antriebsrades 1 dargestellt. Wie diesen zu entnehmen ist, ist die Steuereinheit 19 über ein optionales Wärmeleitpad 21 mit der Radgehäuseeinheit 9, insbesondere dem Hauptkörper 10, verbunden. Darüber hinaus ist in Figur 4b dargestellt, dass auch der Bremswiderstand 27 über ein entsprechendes optionales Wärmeleitpad 39 und/oder optionale Wärmeleitpaste in thermischem Kontakt mit der Abdeckung 25 beziehungsweise der Radgehäuseeinheit 9 steht.

Auf diese Weise wird sichergestellt, dass eine bestmögliche Ableitung von Wärmeenergie von den ersten Funktionskomponenten des Antriebsrades 1 an die Radgehäuseeinheit 9 sichergestellt wird.

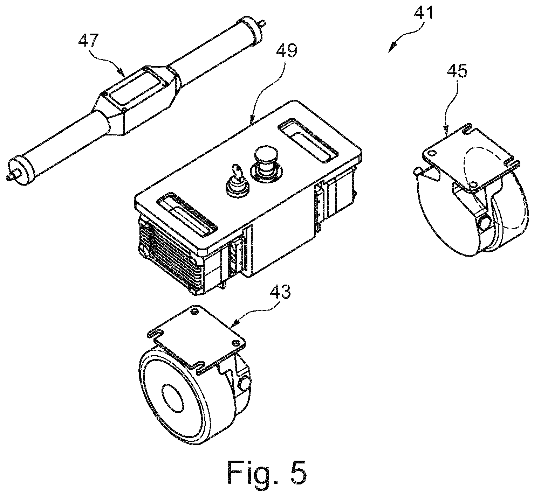

In Figur 5 ist schließlich eine perspektivische Aufsicht auf die Einzelkomponenten eines erfindungsgemäßen Antriebssystems 41 dargestellt. Das Antriebssystem 41 umfasst neben zwei erfindungsgemäßen, als Bockrollen ausgebildeten Antriebsrädern 43, 45 eine Mensch-Maschine-Schnittstelle in Form eines Sensorgriffs 47. Über nicht dargestellte Verbindungen ist der Sensorgriff 47 für eine Energieversorgung mit einer eine Steuervorrichtung darstellenden Elektronikbox 49 verbunden. Die Elektronikbox 49 umfasst insbesondere eine Energieversorgungseinheit in Form einer Akkueinheit. Das Antriebssystem 41 ermöglicht es, dass ein Benutzer über den Sensorgriff 47 Eingaben tätigen kann. Diese werden als Steuerbefehle über nicht dargestellte Leitungen beziehungsweise mittels Funkverbindungen wie WLAN, Bluetooth oder dergleichen, an die Antriebsräder 43, 45, insbesondere deren Steuereinheiten bzw. Antriebseinrichtungen, weitergegeben. In alternativen, nicht dargestellten Ausführungsformen kann vorgesehen sein, dass die Eingaben zunächst an die Steuervorrichtung bzw. Elektronikbox 49 geleitet werden und dort in Steuerbefehle umgewandelt werden bzw. in der Steuervorrichtung bzw. Elektronikbox Steuerbefehle erzeugt werden und über nicht dargestellte Verbindungsleitungen an die in den Antriebsrädern 43, 45 insbesondere deren Steuereinheiten bzw. Antriebseinrichtungen, weitergegeben werden.

Die in der vorstehenden Beschreibung, in den Ansprüchen und in den Figuren offenbarten Merkmale können sowohl einzeln als auch in beliebiger Kombination wesentlich für die Erfindung in den verschiedenen Ausführungsformen sein.

### Bezugszeichenliste

- 1: Antriebsrad
- 3: Radkörper
- 5: Laufbelag
- 7: Radachse
- 9: Radgehäuseeinheit
- 10: Hauptkörper
- 11: Antriebseinheit
- 13: Rotor
- 15: Stator
- 17: Schraube
- 19: Steuereinheit
- 21: Wärmeleitpad
- 23: Dichtungsscheibe
- 25: Abdeckung
- 27: Bremswiderstand
- 29: Befestigungselement
- 31: Befestigungselement
- 32: Abdeckkappe
- 33: Lagerelement
- 35: Permanentmagneten
- 36: Rotorkern
- 37: Wicklung
- 38: Statorkern
- 39: Wärmeleitpad
- 41: Antriebssystem
- 43: Antriebsrad
- 45: Antriebsrad
- 47: Sensorgriff
- 49: Elektronikbox

## Patentansprüche

1. Antriebsrad (1, 43, 45) für einen Transportwagen, wobei das Antriebsrad (1, 43, 45)
- zumindest einen um zumindest eine Radachse (7) rotierbaren Radkörper (3),
- zumindest eine die Radachse (7) stützende Radgehäuseeinheit (9); und
- zumindest eine mit dem Radkörper (3) zumindest teilweise in Wirkverbindung stehende erste Funktionskomponente umfasst, wobei
die Radgehäuseeinheit (9) mit zumindest einer Tragstruktur des Transportwagens verbindbar ist und in thermischen Kontakt mit zumindest einem Teil der ersten Funktionskomponente steht, wobei mittels der Radgehäuseeinheit thermische Energie von der ersten Funktionskomponente abführbar ist,
**dadurch gekennzeichnet, dass in einer ersten Alternative**
(i) die erste Funktionskomponente zumindest bereichsweise zumindest einen Bremswiderstand (27) und/oder zumindest eine Steuereinheit (19) umfasst und
wobei das Antriebsrad zudem zumindest eine Fülleinrichtung (21, 39) umfasst, wobei die Fülleinrichtung in zumindest einem Zwischenraum zwischen der ersten Funktionskomponente (19, 27) und der Radgehäuseeinheit (9) angeordnet ist
und/oder
wobei die Fülleinrichtung mit der Radgehäuseeinheit (9) und der ersten Funktionskomponente im thermischem Kontakt steht,
und
wobei die Fülleinrichtung (21, 39) thermisch leitend wirkt;
**oder dadurch gekennzeichnet, dass in einer zweiten Alternative**
(ii) innerhalb des Radkörpers (3) zumindest eine teilweise die erste Funktionskomponente bildende erste Antriebseinheit (11) angeordnet ist, wobei die erste Antriebseinheit (11) einen Elektromotor bildet und einen mit dem Radkörper (3) verbundenen und eine zweite Funktionskomponente bildenden Rotor (13) umfasst, der eine Vielzahl von Permanentmagneten aufweist, wobei innerhalb des Rotors (13) ein, eine weitere erste Funktionskomponente bildender, Stator (15) angeordnet ist, welcher ortsfest relativ zu der Radgehäuseeinheit (9) angeordnet ist
und
wobei der Stator (15) über Befestigungselemente (17) in Form von Schrauben mit der Radgehäuseeinheit (9) verbunden ist,
wobei die Befestigungselemente (17) eine thermische Verbindung zwischen der Antriebseinheit (11) und der Radgehäuseeinheit (9) sicherstellen.

2. Antriebsrad nach Anspruch 1, erste Alternative (i), **dadurch gekennzeichnet, dass** das Antriebsrad (1) zumindest einen den Radkörper (3) zumindest bereichsweise umgebenden Laufbelag (5) umfasst.

3. Antriebsrad nach Anspruch 1, erste Alternative (i) oder 2, **dadurch gekennzeichnet, dass**
die erste Funktionskomponente zumindest bereichsweise zumindest eine, insbesondere elektrische, erste Antriebseinheit (15), vorzugsweise zum angetriebenen Rotieren des Radkörpers (3), insbesondere um die Radachse (7), zumindest eine, insbesondere elektrische, zweite Antriebseinheit, vorzugsweise zum Schwenken des Radkörpers (3) und/oder Radgehäuseeinheit (9) um zumindest eine Schwenkachse, zumindest eine Energiespeichereinheit, wie eine Batterie und/oder einen Akkumulator, insbesondere zum Steuern der ersten Antriebseinheit (15) und/oder der zweiten Antriebseinheit, zumindest einen Stator (15), zumindest eine Wicklung, zumindest einen Elektromagnet, zumindest ein Statorblech und/oder zumindest einen Statorkern umfasst.

4. Antriebsrad nach Anspruch 3, **dadurch gekennzeichnet, dass** die Schwenkachse zumindest bereichsweise in eine Richtung senkrecht zu der Radachse (7) verläuft, die Schwenkachse und die Radachse (7) sich schneiden und/oder die Schwenkachse und die Radachse (7) windschief zueinander verlaufen.

5. Antriebsrad nach Anspruch 1, erste Alternative (i) und/oder nach einem der vorangehenden Ansprüche 2 bis 4, **dadurch gekennzeichnet, dass** der Radkörper (3) zumindest bereichsweise zumindest eine mit der ersten Funktionskomponente (15), insbesondere der ersten Antriebseinheit (11), der zweiten Antriebseinheit, dem Stator (15), der Wicklung (37), dem Elektromagneten, dem Statorblech und/oder dem Statorkern, in Wirkverbindung und/oder in thermischen Kontakt stehende zweite Funktionskomponente (13) umfasst, insbesondere umfassend zumindest einen Permanentmagneten, zumindest einen Rotor, zumindest ein Rotorblech, zumindest einen Rotorkern, und/oder zumindest einen Permanentmagneten.

6. Antriebsrad nach Anspruch 1, erste Alternative (i) und/oder nach einem der vorangehenden Ansprüche 2 bis 5, **dadurch gekennzeichnet, dass** die Fülleinrichtung zumindest in einem Zwischenraum zwischen der ersten Funktionskomponente (19, 27) und der Radgehäuseeinheit (9) und zwischen der zweiten Funktionskomponente und der Radgehäuseeinheit (9) angeordnet ist und/oder dass die Fülleinrichtung (21, 39) mit der Radgehäuseeinheit (9), der ersten Funktionskomponente und der zweiten Funktionskomponente in thermischem Kontakt steht und/oder wobei die Fülleinrichtung (21, 39) vorzugsweise zumindest eine Wärmeleitpaste, zumindest ein Wärmeleitpad (21, 39) und/oder zumindest eine Wärmeleitfolie umfasst, wobei die Fülleinrichtung (21, 39) insbesondere elektrisch isolierend wirkt.

7. Antriebsrad nach Anspruch 1, erste Alternative (i) und/oder nach einem der vorangehenden Ansprüche 2 bis 6, **dadurch gekennzeichnet, dass** die Radgehäuseeinheit (9) zumindest bereichsweise zumindest eine Oberflächenstrukturierung, vorzugsweise umfassend zumindest eine Kühlrippe, und/oder zumindest eine Kühlfinne aufweist und/oder zumindest eine Lüftereinrichtung, insbesondere zur Erzeugung einer Zwangszirkulation von Umgebungsluft um die Radgehäuseeinheit (9), die erste Funktionskomponente (11, 15, 19,21), die zweite Funktionskomponente (13), den Radkörper (3) und/oder die Radachse (7) umfasst.

8. Antriebsrad nach Anspruch 1, erste Alternative (i) und/oder nach einem der vorangehenden Ansprüche 2 bis 7, **dadurch gekennzeichnet, dass** die Radgehäuseeinheit (9) zumindest bereichsweise Aluminium, Aluminiumoxid, Aluminiumnitrid, Kupfer, Grauguss, Stahlguss, Stahl, zumindest eine Zinklegierung, zumindest eine Verbindung zumindest teilweise umfassend zumindest einen metallischen Werkstoff und/oder Aluminiumdruckguss umfasst; und/oder. mittels der Radgehäuseeinheit (9) thermische Energie an die Tragstruktur leitbar ist, an die Umgebungsluft abgebbar ist und/oder in der Radgehäuseeinheit (9) speicherbar ist.

9. Antriebsrad nach einem der vorangehenden Ansprüche, **dadurch gekennzeichnet, dass**
(i) unter Rückbezug auf einen der Anspruch 1, Alternative (i) eine Vielzahl von ersten Funktionskomponenten (11, 15, 19, 27) vorhanden ist;
(ii) eine Vielzahl zweiten Funktionskomponenten vorhanden ist,
(iii) die Radgehäuseeinheit (9) mehrteilig aufgebaut ist, insbesondere zumindest einen Hauptkörper (10) und zumindest eine mit dem Hauptkörper (10) verbindbare Gehäusekomponente (25) aufweist, wobei insbesondere mittels der Gehäusekomponente (25) thermische Energie von der ersten Funktionskomponente (27), der zweiten Funktionskomponente und/oder zumindest einer der ersten Funktionskomponenten (11, 15, 19, 27) und/oder zweiten Funktionskomponenten an den Hauptkörper (10) übertragbar ist, und/oder
(iv) thermische Energie mittels zumindest eines die Gehäusekomponente (25), den Hauptkörper (10) die erste Funktionskomponente und/oder die zweite Funktionskomponente miteinander verbindenden Verbindungselements, Befestigungselements (29) und/oder Übertragungselementes übertragbar ist.

10. Antriebsrad nach einem der vorangehenden Ansprüche, **dadurch gekennzeichnet, dass** die Radgehäuseeinheit (9) zumindest bereichsweise zumindest eine Radgabel, zumindest eine Radstütze und/oder zumindest einen Radbock bildet und/oder das Antriebsrad (1) zumindest eine Bockrolle, zumindest eine Lenkrolle, zumindest eine zwangsgelenkte Lenkrolle und/oder zumindest eine frei schwenkbare Lenkrolle bildet.

11. Antriebssystem für zumindest einen Transportwagen umfassend zumindest ein Antriebsrad (1, 43, 45), vorzugsweise eine Vielzahl von Antriebsrädern (43, 45), nach einem der vorangehenden Ansprüche wobei das Antriebssystem (41) ferner mit dem Antriebsrad (43. 45) und/oder den Antriebsrädern (43, 45) zumindest indirekt in Wirkverbindung stehend zumindest eine Mensch-Maschienenschnittstelle (47), zumindest eine Energieversorgungseinrichtung (49) und/oder zumindest eine Steuervorrichtung (49) umfasst.

12. Antriebsystem nach Anspruch 11, **dadurch gekennzeichnet, dass** die Mensch-Maschinenschnittstelle zumindest einen Sensorgriff (47), zumindest ein Touchdisplay, zumindest ein Sprachsteuereinheit, zumindest eine Gestensteuereinheit, zumindest eine drahtlose Schnittstelle und/oder zumindest einen Drehfahrgeber umfasst; und/oder
insbesondere basierend auf, vorzugsweise über die Mensch-Maschinenschnittstelle (47) erfolgte, Eingaben und/oder mittels der Steuervorrichtung erzeugt, Steuerbefehle an das Antriebsrad (43, 45) bzw. die Antriebsräder (43, 45), vorzugsweise die Funktionskomponente (19), insbesondere die erste Funktionskomponente, die zweite Funktionskomponente und/oder die Steuereinheit (19), weitergebbar sind.

13. Antriebssystem nach einem der Ansprüche 11 oder 12, **dadurch gekennzeichnet, dass** mittels der, vorzugsweise von der Steuervorrichtung zumindest bereichsweise umfassten, Energieversorgungseinrichtung das Antriebsrad (43, 45) bzw. die Antriebsräder (43, 45), die Mensch-Maschinenschnittstelle (47), die Steuereinheit (19), die erste Funktionskomponente, die zweite Funktionskomponente, die erste Antriebseinheit, die zweite Antriebseinheit, die Steuervorrichtung und/oder zumindest eine Elektronikbox (49) mit Energie versorgbar ist bzw. sind und/oder die Energieversorgungseinrichtung zumindest einen Akkumulator, zumindest eine Batterie, zumindest eine Solarzelle, zumindest eine Brennstoffzelle und/oder zumindest ein, vorzugsweise mit der Radgehäuseeinheit in thermischen Kontakt stehendes, Thermovoltaikelement umfasst.

14. Transportwagen umfassend zumindest ein Antriebsrad nach einem der Ansprüche 1 bis 12 und/oder ein Antriebssystem nach einem der Ansprüche 11 bis 13.

15. Transportwagen nach Anspruch 14, **dadurch gekennzeichnet, dass** der Transportwagen zumindest bereichsweise als Trailer, als Werkzeugwagen und/oder als Traggestell für zumindest eine Maschine, wie zumindest einen Lüfter und/oder zumindest einen Generator ausgebildet ist.

## Claims

1. A drive wheel (1, 43, 45) for a transport trolley, wherein the drive wheel (1, 43, 45) comprises
- at least one wheel body (3) which can be rotated about at least one wheel axle (7),
- at least one wheel housing unit (9) which supports the wheel axle (7), and
- at least one first functional component, which is operatively connected to the wheel body (3) at least in part,
wherein the wheel housing unit (9) is connectable to at least one support structure of the transport trolley and is in thermal contact with at least a part of the first functional component, wherein thermal energy is able to be carried away from the first functional component by means of the wheel housing unit,
**characterized in that, in a first alternative,**
(i) the first functional component comprises at least one braking resistor (27) and/or at least one control unit (19) at least in regions, and
wherein the drive wheel also comprises at least one filling element (21, 39), wherein the filling element is arranged in at least one intermediate space between the first functional component (19, 27) and the wheel housing unit (9),
and/or
wherein the filling element is in thermal contact with the wheel housing unit (9) and the first functional component, and
wherein the filling element (21, 39) has a thermally conductive effect;
**or characterized in that, in a second alternative,**
(ii) at least one first drive unit (11) forming at least partly the first functional component is arranged inside the wheel body (3), wherein the first drive unit (11) forms an electric motor and comprises a rotor (13) that is connected to the wheel body (3) and forms a second functional component having a plurality of permanent magnets, wherein inside the rotor (13) a stator (15) is arranged that forms a further first functional component and is arranged to be stationary relative to the wheel housing unit (9)
and
wherein the stator (15) is connected to the wheel housing unit (9) by means of fastening elements (17) in the form of screws,
wherein the fastening elements (17) ensure a thermal connection between the drive unit (11) and the wheel housing unit (9).

2. The drive wheel according to claim 1, first alternative (i), **characterized in that** the drive wheel (1) comprises at least one tread (5) that surrounds the wheel body (3) at least in regions.

3. The drive wheel according to claim 1, first alternative (i), or 2, **characterized in that** the first functional component comprises, at least in regions, at least one, in particular electrical, first drive unit (15), preferably for rotationally driving the wheel body (3), in particular about the wheel axle (7), at least one, in particular electrical, second drive unit, preferably for pivoting the wheel body (3) and/or the wheel housing unit (9) about at least one pivot axis, at least one energy-storage unit, such as a battery and/or an accumulator, in particular for controlling the first drive unit (15) and/or the second drive unit, at least one stator (15), at least one winding, at least one electromagnet, at least one stator lamination, and/or at least one stator core.

4. The drive wheel according to claim 3, **characterized in that** the pivot axis extends in a direction perpendicular to the wheel axle (7) at least in regions, the pivot axis and the wheel axle (7) intersect, and/or the pivot axis and the wheel axle (7) extend so as to be skewed relative to one another.

5. The drive wheel according to claim 1, first alternative (i), and/or according to any one of the preceding claims 2 to 4, **characterized in that** the wheel body (3) comprises, at least in regions, at least one second functional component (13), which is operatively connected to and/or in thermal contact with the first functional component (15), in particular the first drive unit (11), the second drive unit, the stator (15), the winding (37), the electromagnet, the stator lamination, and/or the stator core, in particular comprising at least one permanent magnet, at least one rotor, at least one rotor lamination, at least one rotor core, and/or at least one permanent magnet.

6. The drive wheel according to claim 1, first alternative (i), and/or according to any one of the preceding claims 2 to 5, **characterized in that** the filling element is arranged at least in an intermediate space between the first functional component (19, 27) and the wheel housing unit (9) and between the second functional component and the wheel housing unit (9) and/or **in that** the filling element (21, 39) is in thermal contact with the wheel housing unit (9), the first functional component, and the second functional component, and/or
wherein the filling element (21, 39) preferably comprises at least one heat-conducting paste, at least one heat-conducting pad (21, 39), and/or at least one heat-conducting foil, wherein the filling element (21, 39) in particular has an electrically insulating effect.

7. The drive wheel according to claim 1, first alternative (i), and/or according to any one of the preceding claims 2 to 6, **characterized in that** the wheel housing unit (9) has, at least in regions, at least one surface structure, preferably comprising at least one cooling rib and/or at least one cooling fin, and/or comprises at least one fan apparatus, in particular for generating forced circulation of ambient air around the wheel housing unit (9), the first functional component (11, 15, 19, 21), the second functional component (13), the wheel body (3), and/or the wheel axle (7).

8. The drive wheel according to claim 1, first alternative (i), and/or according to any one of the preceding claims 2 to 7, **characterized in that** the wheel housing unit (9) comprises, at least in regions, aluminum, aluminum oxide, aluminum nitride, copper, gray iron, cast steel, steel, at least one zinc alloy, at least one compound at least partially comprising at least one metal material and/or die-cast aluminum, and/or thermal energy can be conducted to the support structure by means of the wheel housing unit (9), can be released to the ambient air, and/or can be stored in the wheel housing unit (9).

9. The drive wheel according to any one of the preceding claims, **characterized in that**
(i) with reference to claim 1, alternative (i), a plurality of first functional components (11, 15, 19, 27) are present,
(ii) a plurality of second functional components are present,
(iii) the wheel housing unit (9) is constructed in multiple parts, in particular has at least one main body (10) and at least one housing component (25) that is connectable to the main body (10), wherein thermal energy in particular is able to be transmitted from the first functional component (27), the second functional component, and/or at least one of the first functional components (11, 15, 19, 27) and/or second functional components to the main body (10) by means of the housing component (25), and/or
(iv) thermal energy can be transmitted by means of at least one connection element, fastening element (29), and/or transmission element that interconnects the housing component (25), the main body (10), the first functional component, and/or the second functional component.

10. The drive wheel according to any one of the preceding claims, **characterized in that** the wheel housing unit (9) forms, at least in regions, at least one wheel fork, at least one wheel support, and/or at least one wheel bracket, and/or the drive wheel (1) forms at least one fixed castor, at least one swivel castor, at least one positively steered swivel castor, and/or at least one freely pivotable swivel castor.

11. A drive system for at least one transport trolley, comprising at least one drive wheel (1, 43, 45), preferably a plurality of drive wheels (43, 45), according to any one of the preceding claims, wherein the drive system (41) further comprises at least one human-machine interface (47), at least one energy-supply apparatus (49), and/or at least one control device (49) that is at least indirectly operatively connected to the drive wheel (43, 45) and/or drive wheels (43, 45).

12. The drive system according to claim 11, **characterized in that** the human-machine interface comprises at least one sensor handle (47), at least one touch-screen display, at least one voice control unit, at least one gesture control unit, at least one wireless interface, and/or at least one traction switch, and/or control commands can be relayed to the drive wheel (43, 45) or drive wheels (43, 45), preferably the functional component (19), in particular the first functional component, the second functional component, and/or the control unit (19), in particular on the basis of inputs preferably made via the human-machine interface (47) and/or in a manner generated by means of the control device.

13. The drive system according to any one of claims 11 or 12, **characterized in that**, by means of the energy-supply apparatus, which the control device preferably comprises at least in regions, the drive wheel (43, 45) or drive wheels (43, 45), the human-machine interface (47), the control unit (19), the first functional component, the second functional component, the first drive unit, the second drive unit, the control device, and/or at least one electronics box (49) can be supplied with energy, and/or the energy-supply apparatus comprises at least one accumulator, at least one battery, at least one solar cell, at least one fuel cell, and/or at least one thermovoltaic element, which is preferably in thermal contact with the wheel housing unit.

14. A transport trolley comprising at least one drive wheel according to any one of claims 1 to 12 and/or a drive system according to any one of claims 11 to 13.

15. The transport trolley according to claim 14, **characterized in that** the transport trolley is designed, at least in regions, as a trailer, a tool trolley, and/or a support rack for at least one machine, such as at least one fan and/or at least one generator.

## Revendications

1. Roue motrice (1, 43, 45) pour un chariot, dans laquelle la roue motrice (1, 43, 45) comprend
- au moins un corps de roue (3) qui peut tourner autour d'au moins un essieu (7),
- au moins une unité de passage de roue (9) qui supporte l'essieu (7) ; et
- au moins un premier composant fonctionnel qui est au moins partiellement en liaison fonctionnelle avec le corps de roue (3), dans laquelle
l'unité de passage de roue (9) peut être reliée à au moins une structure portante du chariot et elle est en contact thermique avec au moins une partie du premier composant fonctionnel, l'énergie thermique pouvant être évacuée du premier composant fonctionnel à l'aide de l'unité de passage de roue,
**caractérisée en ce que dans une première variante**
(i) le premier composant fonctionnel comprend au moins par sections au moins une résistance de freinage (27) et/ou au moins une unité de commande (19) et dans laquelle la roue motrice comprend de plus au moins une élément de remplissage (21, 39),
dans laquelle l'élément de remplissage est disposée dans au moins un espace intermédiaire entre le premier composant fonctionnel (19, 27) et l'unité de passage de roue (9)
et/ou
dans laquelle l'élément de remplissage est en contact thermique avec l'unité de passage de roue (9) et le premier composant fonctionnel,
et
dans laquelle l'élément de remplissage (21, 39) a un effet thermiquement conducteur ;
**ou caractérisée en ce que dans une seconde variante**
(ii) à l'intérieur du corps de roue (3) est disposée au moins une première unité d'entraînement (11) formant au moins partiellement le premier composant fonctionnel, la première unité d'entraînement (11) formant un moteur électrique et comprenant un rotor (13), relié au corps de roue (3) et formant un second composant fonctionnel qui présente une pluralité d'aimants permanents, dans laquelle à l'intérieur du rotor (13) est disposé un stator (15) formant un autre premier composant fonctionnel, lequel est disposé de manière fixe par rapport à l'unité de passage de roue (9)
et
dans laquelle le stator (15) est relié à l'unité de passage de roue (9) par le biais d'éléments de fixation (17) sous la forme de vis,
dans laquelle les éléments de fixation (17) assurent une liaison thermique entre l'unité d'entraînement (11) et l'unité de passage de roue (9).

2. Roue motrice selon la revendication 1, première variante (i), **caractérisée en ce que** la roue motrice (1) comprend au moins une bande de roulement (5) entourant le corps de roue (3) au moins par sections.

3. Roue motrice selon la revendication 1, première variante (i) ou 2, **caractérisée en ce que** le premier composant fonctionnel comprend au moins par sections au moins une première unité d'entraînement (15), en particulier électrique, de préférence pour l'entraînement en rotation du corps de roue (3), en particulier autour de l'essieu (7), au moins une seconde unité d'entraînement, en particulier électrique, de préférence pour le pivotement du corps de roue (3) et/ou l'unité de passage de roue (9) autour d'au moins un axe de pivotement, au moins une unité d'accumulation d'énergie, telle une batterie et/ou un accumulateur, en particulier pour commander la première unité d'entraînement (15) et/ou la seconde unité d'entraînement, au moins un stator (15), au moins un bobinage, au moins un électroaimant, au moins une tôle de stator et/ou au moins un noyau de stator.

4. Roue motrice selon la revendication 3, **caractérisée en ce que** l'axe de pivotement s'étend au moins par sections dans une direction perpendiculairement à l'essieu (7), l'axe de pivotement et l'essieu (7) se coupent et/ou l'axe de pivotement et l'essieu (7) s'étendent de manière penchée l'un par rapport à l'autre.

5. Roue motrice selon la revendication 1, première variante (i) et/ou selon l'une quelconque des revendications précédentes 2 à 4, **caractérisée en ce que** le corps de roue (3) comprend au moins par sections au moins un second composant fonctionnel (13) en liaison fonctionnelle et/ou en contact thermique avec le premier composant fonctionnel (15), en particulier la première unité d'entraînement (11), la seconde unité d'entraînement, le stator (15), le bobinage (37), l'électroaimant, la tôle de stator et/ou le noyau de stator, et en particulier comprenant au moins un aimant permanent, au moins un rotor, au moins une tôle de rotor, au moins un noyau de rotor, et/ou au moins un aimant permanent.

6. Roue motrice selon la revendication 1, première variante (i) et/ou selon l'une quelconque des revendications précédentes 2 à 5, **caractérisée en ce que** l'élément de remplissage est disposée au moins dans un espace intermédiaire entre le premier composant fonctionnel (19, 27) et l'unité de passage de roue (9) et entre le second composant fonctionnel et l'unité de passage de roue (9) et/ou **en ce que** l'élément de remplissage (21, 39) est en contact thermique avec l'unité de passage de roue (9), le premier composant fonctionnel et le second composant fonctionnel et/ou dans laquelle l'élément de remplissage (21, 39) comprend de préférence au moins une pâte thermo-conductrice, au moins un patin thermo-conducteur (21, 39) et/ou au moins une feuille thermo-conductrice, dans laquelle l'élément de remplissage (21, 39) a un effet particulièrement isolant électriquement.

7. Roue motrice selon la revendication 1, première variante (i) et/ou selon l'une quelconque des revendications précédentes 2 à 6, **caractérisée en ce que** l'unité de passage de roue (9) présente au moins par sections au moins une structuration de surface, de préférence comprenant au moins une nervure de refroidissement, et/ou au moins une ailette de refroidissement et/ou comprend au moins une installation de ventilateur, en particulier pour la génération d'une circulation forcée d'air ambiant autour de l'unité de passage de roue (9), du premier composant fonctionnel (11, 15, 19,21), du second composant fonctionnel (13), du corps de roue (3) et/ou de l'essieu (7).

8. Roue motrice selon la revendication 1, première variante (i) et/ou selon l'une quelconque des revendications précédentes 2 à 7, **caractérisée en ce que** l'unité de passage de roue (9) comprend au moins par sections de l'aluminium, un oxyde d'aluminium, du nitrure d'aluminium, du cuivre, de la fonte grise, de l'acier coulé, de l'acier, au moins un alliage de zinc, au moins un composé au moins en partie comprenant au moins une matière métallique et/ou une coulée sous pression d'aluminium ; et/ou l'énergie thermique peut être dirigée vers la structure portante à l'aide de l'unité de passage de roue (9), être rejetée dans l'air ambiant et/ou accumulée dans l'unité de passage de roue (9).

9. Roue motrice selon l'une quelconque des revendications précédentes, **caractérisée en ce que**
(i) en référence à la revendication 1, variante (i), une pluralité de premiers composants fonctionnels (11, 15, 19, 27) est présente ;
(ii) une pluralité de seconds composants fonctionnels est présente,
(iii) l'unité de passage de roue (9) est construite en plusieurs pièces, présente en particulier au moins un corps principal corps principal (10) et au moins un composant de boîtier (25) qui peut être relié au corps principal (10), dans laquelle en particulier l'énergie thermique peut à l'aide du composant de boîtier (25) être transmise au corps principal (10) par le premier composant fonctionnel (27), le second composant fonctionnel et/ou au moins un des composants parmi le premier composant fonctionnel (11, 15, 19, 27) et/ou le second composant fonctionnel,
et/ou
(iv) l'énergie thermique peut être transmise à l'aide d'au moins un élément de liaison, un élément de fixation (29) et/ou un élément de transmission reliant entre eux le composant de boîtier (25), le corps principal (10), le premier composant fonctionnel et/ou le second composant fonctionnel.

10. Roue motrice selon l'une quelconque des revendications précédentes, **caractérisée en ce que** l'unité de passage de roue (9) forme au moins par sections au moins une fourche de roue, au moins un support de roue et/ou au moins un chevalet de roue et/ou la roue motrice (1) forme au moins une roulette fixe, au moins une roulette pivotante à direction forcée et/ou au moins une roulante pivotante qui pivote librement.

11. Système d'entraînement pour au moins un chariot comprenant au moins une roue motrice (1, 43, 45), de préférence une pluralité de roues motrices (43, 45), selon l'une quelconque des revendications précédentes, dans lequel le système d'entraînement (41) comprend en outre au moins une interface homme-machine (47), au moins une installation d'alimentation en énergie (49) et/ou au moins un moyen de commande (49) qui est au moins indirectement en liaison fonctionnelle avec la roue motrice (43, 45) et/ou les roues motrices (43, 45).

12. Système d'entraînement selon la revendication 11, **caractérisé en ce que** l'interface homme-machine comprend au moins un manche de capteur (47), au moins un écran tactile, au moins une unité de commande vocale, au moins une unité de commande gestuelle, au moins une interface sans fil et/ou au moins un générateur de roulage rotatif ; et/ou
en particulier en se basant sur des entrées obtenues de préférence par le biais de l'interface homme-machine (47), et/ou générées à l'aide du moyen de commande, des ordres de commande peuvent être transmis à la roue motrice (43, 45) respectivement aux roues motrices (43, 45), de préférence au composant fonctionnel (19), en particulier au premier composant fonctionnel, au second composant fonctionnel et/ou à l'unité de commande (19).

13. Système d'entraînement selon l'une quelconque des revendications 11 ou 12, **caractérisé en ce que**, à l'aide de l'installation d'alimentation en énergie, comprise de préférence par le moyen de commande au moins par sections, la roue motrice (43, 45) respectivement les roues motrices (43, 45), l'interface homme-machine (47), l'unité de commande (19), le premier composant fonctionnel, le second composant fonctionnel, la première unité d'entraînement, la seconde unité d'entraînement, le moyen de commande et/ou au moins un boîtier électronique (49) peut respectivement peuvent être alimenté(s) en énergie et/ou l'installation d'alimentation en énergie comprend au moins un accumulateur, au moins une batterie, au moins une cellule solaire, au moins une pile à combustible et/ou au moins un élément thermo-voltaïque, de préférence en contact thermique avec l'unité de passage de roue.

14. Chariot comprenant au moins une roue motrice selon l'une quelconque des revendications 1 à 12 et/ou un système d'entraînement selon l'une quelconque des revendications 11 à 13.

15. Chariot selon la revendication 14, **caractérisé en ce que** le chariot est réalisé au moins par sections sous la forme d'une remorque, d'un chariot à outils et/ou d'un châssis porteur pour au moins une machine, tel qu'au moins un ventilateur et/ou au moins un générateur.
